# EUROPEAN PATENT APPLICATION

(11) **EP 2 677 702 A2**
(43) Date of publication of application: **25.12.2013**
(21) Application number: 11755712.4
(22) Date of filing: 27.04.2011
(51) Int. Cl.: H04L 12/56

(54) **A METHOD AND APPARATUS FOR LOAD BALANCE**

(71) Applicant: Huawei Technologies Co., Ltd., Shenzhen, Guangdong 518129 (CN)
(72) Inventor: FAN, Fan, Shenzhen Guangdong 518129 (CN)
(74) Representative: Epping - Hermann - Fischer
(86) International application number: PCT/CN2011/073399
(87) International publication number: WO 2011/113395

(57) **Abstract**

Embodiments of the present invention provide a load sharing method and apparatus. The method includes: receiving (201), by a second provider edge PE device, a multi-chassis MC negotiation synchronization frame sent by a first PE device, where the MC negotiation synchronization frame carries information used to indicate a first virtual local area network VLAN; determining (202), by the second PE device, an active/standby state of the second PE device according to the information used to indicate a first VLAN, where the active/standby state of the second PE device corresponds to the first VLAN; and sending (203), by the second PE device, the active/standby state of the second PE device to a customer edge CE device, so that the CE device forwards a frame of the first VLAN according to the active/standby state of the second PE device. With the method and apparatus provided by the embodiments of the present invention, a massive waste of bandwidths and a service interruption caused by unnecessary service convergence may be avoided.

## Description

### TECHNICAL FIELD

The present invention relates to the network field, and in particular, to a load sharing method and apparatus.

### BACKGROUND

LACP (Link Aggregation Control Protocol, link aggregation control protocol) is a protocol for implementing link dynamic aggregation and deaggregation. The LACP protocol exchanges information with a peer end through an LACPDU (Link Aggregation Control Protocol Data Unit, link aggregation control protocol data unit), so as to determine which links may be added to a same aggregation group, when a certain link can be added to an aggregation group, which links in the same aggregation group bear a data frame, and so on.

In most service providers' networks, in order to ensure connectivity of a network service, a CE (Customer Edge, customer edge) device is usually dual-homed to two PE (Provider Edge, provider edge) devices at an access aggregation position, and in this case, problems of negotiation of active/standby PE devices and active/standby synchronization between the CE and PE devices occur. An existing MC-LAG (Multi-Chassis Link Aggregation Group, multi-chassis link aggregation group) technology and PW (Pseudo-Wire, pseudo-wire) redundant protection coordinate to solve the problems of active/standby negotiation and synchronization, however, a massive waste of bandwidths and an interruption caused by unnecessary service convergence still exist.

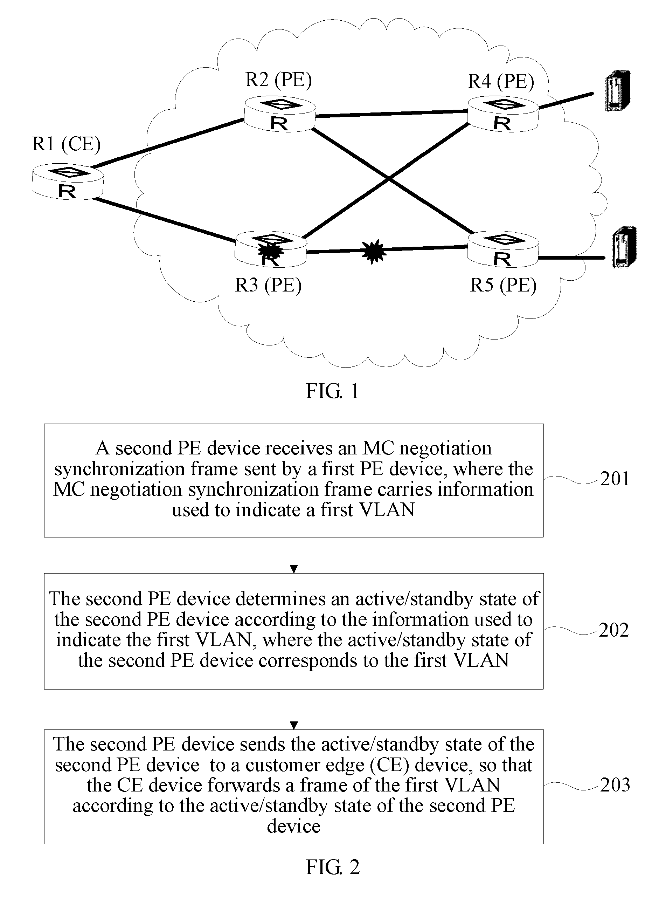

As shown in FIG. 1, an R1 (CE) is dual-homed to an R2 (PE) and an R3 (PE), a VLAN1 (service 1) accesses to an R4 through a PW, and a VLAN2 (service 2) accesses to an R5 through a PW In an implementation manner in the prior art, the R2 and the R3 determine an active PE device through negotiation. Take the R3 as an example, the R3 instructs the R1 device to use a link from the R1 to the R3 as an active link to transmit data, a link from the R1 to the R2 as a backup link; and the R4 and the R5 also use the PW to the R3 as an active PW In this case, data traffic of the service 1 transmits from the R1 to the R4 through the R3, and data traffic of service 2 transmits from the R1 to the R5 through the R3 device. When a fault occurs to the R3, the R2 switches to an active PE device to implement fault protection.

However, in the foregoing prior art, when the R3 works normally, a link from the R1 to the R2, a PW from the R4 to the R2, and a PW from the R5 to the R2 are always idle, which wastes bandwidth resources to a certain extent. And, in some scenarios, for example, in the case that a fault occurs to only a PW from the R3 to the R5, all services may switch to the R2, so that the service 1 without a faults also needs to perform a link switch, and obviously, this is unnecessary and causes a service interruption of the service 1. Certainly, all services may not be switched but kept on the R3, however, a service interruption of the service 2 cannot be recovered, and an objective of fault protection cannot be implemented.

### SUMMARY

Embodiments of the present invention provide a load sharing method and apparatus, so as to solve technical problems which are caused by an existing load sharing method and include a massive waste of bandwidths and a service interruption caused by unnecessary service convergence.

The foregoing objectives of the embodiments of the present invention are implemented through the following technical solutions.

A load sharing method includes:
receiving, by a second provider edge PE device, a multi-chassis MC negotiation synchronization frame sent by a first PE device, where the MC negotiation synchronization frame carries information used to indicate a first virtual local area network VLAN;
determining, by the second PE device, an active/standby state of the second PE device according to the information used to indicate the first VLAN, where the active/standby state of the second PE device corresponds to the first VLAN; and
sending, by the second PE device, the active/standby state of the second PE device to a customer edge CE device, so that the CE device forwards a frame of the first VLAN according to the active/standby state of the second PE device.

A load sharing method includes:
receiving, by a customer edge CE device, active/standby state information sent by at least one provider edge PE device, where an active/standby state of the at least one PE device corresponds to a VLAN; and
forwarding, by the CE device, a frame of the VLAN according to received active/standby state information of the at least one PE device.

A provider edge PE device used for load sharing includes:
a receiving unit, configured to receive an MC negotiation synchronization frame sent by a first PE device, where the MC negotiation synchronization frame carries information used to indicate a first VLAN;
a determining unit, configured to determine, according to the information which is used to indicate the first VLAN and received by the receiving unit, an active/standby state of the PE device used for load sharing, where the active/standby state of the PE device used for load sharing corresponds to the first VLAN; and
a sending unit, configured to send the active/standby state of the PE device used for load sharing to a customer edge CE device, so that the CE device forwards a frame of the first VLAN according to the active/standby state of the PE device used for load sharing.

A customer edge CE device includes:
a receiving unit, configured to receive an active/standby state sent by at least one provider edge PE device; where the active/standby state of the at least one PE device corresponds to a VLAN; and
a determining unit, configured to forward a frame of the VLAN according to active/standby state information of the at least one PE device, where the active/standby state information of the at least one PE device is received by the receiving unit.

A load sharing system includes:
at least one PE device, configured to receive an MC negotiation synchronization frame sent by a first PE device, where the MC negotiation synchronization frame carries information used to indicate a first VLAN, determine an active/standby state of the PE device according to the information used to indicate the first VLAN, where the active/standby state of the PE device corresponds to the first VLAN, and send the active/standby state of the PE device to a customer edge CE device, so that the CE device forwards a frame of the first VLAN according to the active/standby state of the PE device; and
the CE device, configured to receive the active/standby state sent by the at least one PE device, where the active/standby state of the at least one PE device corresponds to the VLAN, and forward a frame of the VLAN according to received active/standby state information of the at least one PE device.

With the method and the apparatus provided by the embodiments of the present invention, load sharing based on a VLAN is implemented, thus avoiding a waste of bandwidths and a service interruption caused by unnecessary service convergence.

### BRIEF DESCRIPTION OF DRAWINGS

Accompanying drawings described here are provided for further understanding of the embodiments of the present invention, and construct part of the application, but are not intended to limit the present invention. In the accompanying drawings:
FIG. 1 is a schematic structural diagram of links of a CE device, R1, dual-homed to two PEs, R2 and R3, in a prior art;
FIG. 2 is a flow chart of a method according to an embodiment of the present invention;
FIG. 3 is a flow chart of a method according to n another embodiment of the present invention;
FIG. 4 is a schematic structural diagram of links of an R1 dual-homed to an R2 and an R3 according to an embodiment of the present invention;
FIG. 5 is a block diagram of components of a PE device according to an embodiment of the present invention;
FIG. 6 is a block diagram of components of a CE device according to an embodiment of the present invention; and
FIG. 7 is a block diagram of components of a routing management system according to an embodiment of the present invention.

### DETAILED DESCRIPTION

In order to make the objectives, technical solutions and advantages of the embodiments of the present invention clearer, the embodiments of the present invention are further described in detail below with reference to the embodiments and the accompanying drawings. Here, the exemplary embodiments of the present invention and the description are only intended to explain the present invention, rather than limit the present invention.

FIG. 2 is a flow chart of a load sharing method according to an embodiment of the present invention, where the method includes:
201: A second PE device receives an MC (Multi-Chassis, multi-chassis) negotiation synchronization frame sent by a first PE device, where the MC negotiation synchronization frame carries information used to indicate information of a first VLAN (Virtual Local Area Network, virtual local area network).

Optionally, the first VLAN is a VLAN supported by the first PE device, and may include: at least one VLAN, or at least one VLAN group, or at least one VLAN and at least one VLAN group.

Optionally, the information used to indicate the first VLAN may include: an identification of the first VLAN and priority information of the first VLAN in the first PE device. For example, the identification of the first VLAN may be a VLAN ID, or a VLAN group ID.
202: The second PE device determines an active/standby state of the second PE device according to the information used to indicate the first VLAN, where the active/standby state of the second PE device corresponds to the first VLAN.

Optionally, the determining, by the second PE device, the active/standby state of the second PE device according to the information used to indicate the first VLAN may include:
determining, by the second PE device, the active/standby state of the second PE device according to the priority information of the first VLAN in the first PE device. For example, the second PE device compares the priority information of the first VLAN in the first PE device and priority information of the first VLAN in the second PE device. When a priority of the first VLAN in the first PE device is higher than a priority of the first VLAN in the second PE device, the second PE device is determined as a standby device of the first VLAN. When the priority of the first VLAN in the first PE device is lower than the priority of the first VLAN in the second PE device, the second PE device is determined as an active device of the first VLAN.
203: The second PE device sends the active/standby state of the second PE device to a customer edge CE device, so that the CE device forwards a frame of the first VLAN according to the active/standby state of the second PE device.

Optionally, the second PE device in this embodiment may send, through an LACP message, the active/standby state of the second PE device to the customer edge CE device. For example, a TLV (Type Length Value, type length value) may be added in the LACP message to carry active/standby state information of the second PE device. The second PE device in this embodiment may also carry its active/standby state information through other protocol messages or in other manners (for example: manners such as reusing an original field), which does not limit this embodiment.

Optionally, in this embodiment, if the CE device does not support the forwarding of the frame of the first VLAN according to the active/standby state of the second PE device, a standard LACP message may be replied to the second PE device, the second PE device may modify its active/standby negotiation result to negotiate all active PEs of VLANs to a same device, and send the standard LACP message again and execute according to a scheme in the prior art.

Similarly, the first PE device also executes the foregoing method, so that the CE device forwards a frame of a certain VLAN according to the active/standby state of the first PE device.

In the method according to this embodiment, according to information of the VLAN, the active/standby state of the PE device is determined, so as to distinguish active/standby negotiation of the VLAN, and the active/standby state of the PE device is sent to the CE device, thus implementing load sharing based on a VLAN. Therefore, a massive waste of bandwidths and a service interruption caused by unnecessary service convergence may be avoided.

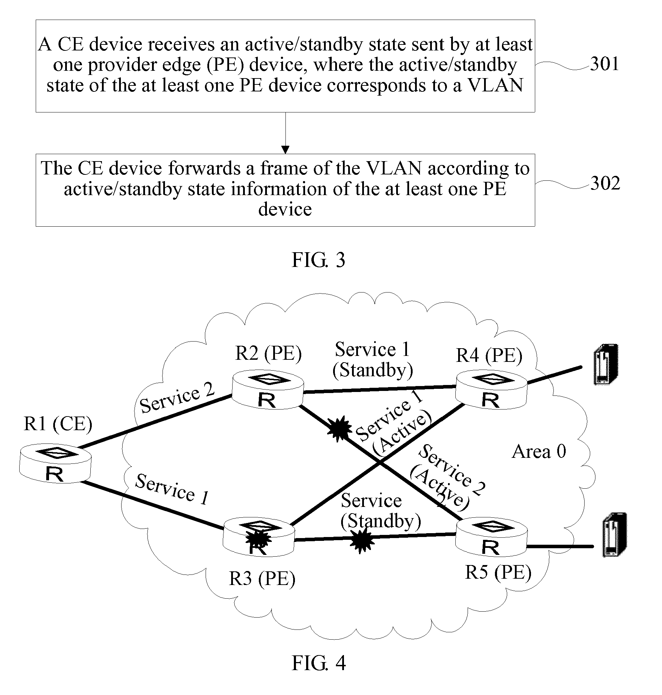

FIG. 3 is a flow chart of a load sharing method according to an embodiment of the present invention, where the method includes:
301: A CE device receives an active/standby state sent by at least one provider edge (PE) device, where the active/standby state of the at least one PE device corresponds to a VLAN.

For example, the CE device receives an active/standby state of a PE, where the active/standby state of the PE is sent by the PE device, and according to the active/standby state of the PE device, the CE device may know that the PE device is an active device of which VLAN or VLAN group or of which VLANs or VLAN groups, and is a standby device of which VLAN or VLAN group or of which VLANs or VLAN groups.

Optionally, the active/standby state of the at least one PE device may be carried in the LACP message.
302: The CE device forwards a frame of the VLAN according to received active/standby state information of the at least one PE device.

For example, the CE device learns, according to received active/standby state of a first PE device, that the first PE device is an active device of a VLAN1, and is a standby device of a VLAN2; and learns, according to received active/standby state of a second PE device, that the second PE device is a standby device of the VLAN1, and is an active device of the VLAN2. Therefore, the CE device may forward a frame of the VLAN1 through a link between the CE device and the first PE device; and forward a frame of the VLAN2 through a link between the CE device and the second PE device.

In the foregoing example, if a fault occurs to the first PE device, or a fault occurs to a PW between the first PE device and a remote PE device, or a fault occurs to a link between the CE device and the first PE device, the CE device may forward the frame of the VLAN 1 through the link between the CE device and the second PE device.

In the method according to this embodiment, the CE device receives the active/standby state of the PE device, thus implementing load sharing based on a VLAN. Therefore, a massive waste of bandwidths and a service interruption caused by unnecessary service convergence may be avoided.

To make the methods according to the embodiments shown in FIG. 2 and FIG. 3 clearer and more comprehensible, an embodiment of the present invention is described in detail in the following through a specific scene.

FIG. 4 is a schematic structural diagram of a CE device, R1, dual-homed to two PE devices, R2 and R3. Referring to FIG. 4, in this scene, it is assumed that a servicel (service 1) encapsulates a VLAN4, and accesses to an R4 through an active/standby PW, and it is assumed that a service2 (service 2) encapsulates a VLAN5, and accesses to an R5 through an active/standby PW.

In this embodiment, according to a method in this embodiment, an MC synchronization protocol is first run between the R2 and the R3, and an identification of a VLAN or a VLAN group, where the VLAN or the VLAN group is supported by the R2 and the R3 separately and priority information of the VLAN or the VLAN group are added to the MC synchronization protocol. The R2 and the R3 negotiate, by using the MC synchronization protocol, an active PE of the VLAN4, such as the R3, and an active PE of the VLAN5, such as the R2. A multi-chassis link aggregation group protocol is run between the R1 and the R2, and between the R1 and the R3 respectively. In frames of the LACP protocol, where the frames of the LACP protocol are sent by the R2 and the R3 to the R1, active/standby state information of the R2 and active/standby state information of the R3 is added, that is, in an LACP message sent by the R2 to the R1, information that the R2 is an active PE device of the VLAN5 and the R2 is a standby PE device of the VLAN4 is added, and in an LACP message sent by the R3 to the R1, information that the R3 is an active PE device of the VLAN4 and the R3 is a standby PE device of the VLAN5 is added.

With the method according to this embodiment, traffic of the servicel passes through a link from the R1 to the R3, and data traffic of the service2 passes through a link from the R1 to the R2, and the problem that a service is distinguished to perform load sharing is overcome. When a fault occurs to the R3, the R2 upgrades to be an active PE device of the service1, and in this case, service traffic of the servicel is switched to the R2 device, and service traffic of the original service 2 is not affected by the fault and does not need to be switched. When a fault occurs to a PW from the R3 to the R4, the servicel related to this PW is switched to the R2 device, if there is a service 3 that uses the R3 as an active PE device, and uses a PW from the R3 to the R5 as an active PW, the service 3 is not affected. When a fault occurs to the R2, the R3 upgrades to be an active PE device of the service2, and in this case, service traffic of the service2 is switched to the R3 device, and service traffic of the original servicel is not affected by the fault and does not need to be switched. When a fault occurs to a PW from the R2 to the R5, and the service 2 related to this PW is switched to the R3 device, if there is a service 4 that uses the R2 as an active PE device, and uses a PW from the R2 to the R4 as an active PW exists, the service 4 is not affected. Therefore, a massive waste of bandwidths and a service interruption caused by unnecessary service convergence are efficiently avoided.

In a typical double PE redundant protection scene, with the method according to the embodiment of the present invention, sharing according to a service load and convergence according to a service are implemented. Therefore, reliability of the network is improved, and a utilization rate of the link is also improved. In addition, the embodiment of the present invention also takes compatibility into consideration, and an original method is still adopted to perform active/standby negotiation in the scene that a new extension cannot be supported.

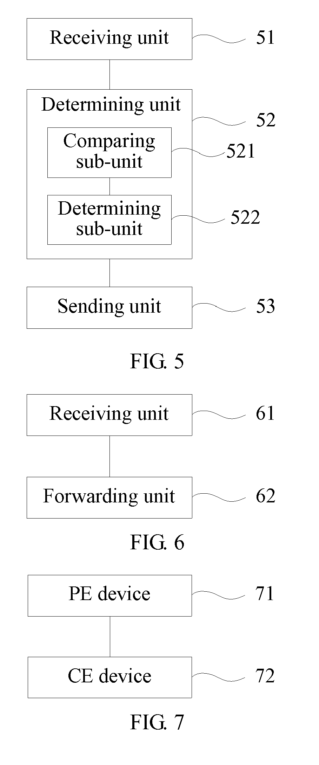

FIG. 5 is a block diagram of components of a load sharing PE device according to an embodiment of the present invention. Referring to FIG. 5, the PE device includes:
a receiving unit 51, configured to receive an MC (Multi-Chassis, multi-chassis) negotiation synchronization frame sent by a first PE device, where the MC negotiation synchronization frame carries information used to indicate a first VLAN (Virtual Local Area Network, virtual local area network);
a determining unit 52, configured to determine an active/standby state of the PE device according to the information used to indicate the first VLAN, where the active/standby state of the two PE device corresponds to the first VLAN; and
a sending unit 53, configured to send the active/standby state of the load sharing PE device to a customer edge CE device, so that the CE device forwards a frame of the first VLAN according to the active/standby state of the load sharing PE device.

In one embodiment, the first VLAN is a VLAN supported by the first PE device, and may include: at least one VLAN, or at least one VLAN group, or at least one VLAN and at least one VLAN group.

In one embodiment, the information used to indicate the first VLAN may include: an identification of the first VLAN and priority information of the first VLAN in the first PE device. For example, the identification of the first VLAN may be a VLAN ID, or a VLAN group ID.

Optionally, in one embodiment, the determining unit 52 may include:
a comparing sub-unit 521, configured to compare the priority information of the first VLAN in the first PE device and priority information of the first VLAN in the PE device; and
a determining sub-unit 522, configured to determine, according to a comparison result of the comparing sub-unit 521, the active/standby state of the load sharing PE device; when a priority of the first VLAN in the first PE device is higher than a priority of the first VLAN in the load sharing PE device, determine the load sharing PE device as a standby device of the second VLAN; and when the priority of the first VLAN in the first PE device is lower than the priority of the first VLAN in the load sharing PE device, determine the load sharing PE device as an active device of the first VLAN.

Optionally, in one embodiment, the sending unit 53 is specifically configured to send, through a LACP message, the active/standby state of the load sharing PE device to the customer edge CE device. For example, a TLV (Type Length Value, type length value) may be added in the LACP message to carry active/standby state information of the PE device. In another embodiment, the sending unit 53 may also carry its active/standby state information through other protocol messages or other manners (for example: manners such as reusing an original field).

Respective components of the PE device in this embodiment are respectively configured to implement respective steps in the method of the embodiment shown in FIG. 2. Because respective steps are illustrated in detail in the method of the embodiment shown in FIG. 2, details are not repeatedly described here.

With the PE device provided by the embodiment of the present invention, load sharing based on a VLAN is implemented, and a massive waste of bandwidths and a service interruption caused by unnecessary service convergence may be avoided.

FIG. 6 is a block diagram of components of a CE device according to an embodiment of the present invention. Referring to FIG. 6, the CE device includes:
a receiving unit 61, configured to receive an active/standby state sent by at least one provider edge PE device; where the active/standby state of the at least one PE device corresponds to a VLAN; and
a forwarding unit 62, configured to forward a frame of the VLAN according to received active/standby state information of the at least one PE device.

In one embodiment, the active/standby state of the at least one PE device may be carried through an expanded TLV in an LACP message.

Respective components of the CE device in this embodiment are respectively configured to implement respective steps in the method of the embodiment shown in FIG. 3. Because respective steps are illustrated in detail in the method of the embodiment shown in FIG. 3, details are not repeatedly described here.

With the CE device provided by the embodiment of the present invention, load sharing based on a VLAN is implemented, and a massive waste of bandwidths and a service interruption caused by unnecessary service convergence may be avoided.

FIG. 7 is a block diagram of components of a load sharing system according to an embodiment of the present invention. Referring to FIG. 7, the load sharing system includes:
at least one PE device 71, configured to receive an MC (Multi-Chassis, multi-chassis) negotiation synchronization frame sent by a first PE device, where the MC negotiation synchronization frame carries information used to indicate a first VLAN (Virtual Local Area Network, virtual local area network); determine an active/standby state of the PE device 71 according to the information used to indicate the first VLAN, where the active/standby state of the PE device 71 corresponds to the first VLAN; and send the active/standby state of the PE device 71 to a customer edge CE device, so that the CE device 71 forwards a frame of the first VLAN according to the active/standby state of the PE device 71; and
a CE device 72, configured to receive the active/standby state sent by the at least one PE device 71, where the active/standby state of the at least one PE device 71 corresponds to the VLAN; and forward the frame of the first VLAN according to received active/standby state information of the PE device 71.

Optionally, the PE device 71 may send the active/standby state to the CE device 72 through a TLV added in an LACP message.

The PE device 71 in this embodiment may be implemented through the PE device in the embodiment shown in FIG. 5, the CE device 72 may be implemented through the CE device in the embodiment shown in FIG. 6. Because the PE device and the CE device are illustrated in detail in the embodiments shown in FIG. 5 and FIG. 6, details are not repeatedly described here.

With the load sharing system provided in the embodiment of the present invention, load sharing based on a VLAN is implemented, and a massive waste of bandwidths and a service interruption caused by unnecessary service convergence may be avoided.

In combination with the embodiments disclosed here, the described steps of the method or an algorithm may be directly implemented by using hardware, a software module executed by a processor, or the combination of the two. The software module may be disposed in a random access memory (RAM), a memory, a read-only memory (ROM), an electrically programmable ROM, an electrically erasable programmable ROM, a register, a hard disk, a removable magnetic disk, a CD-ROM, or any storage medium of other forms well-known in the technical field.

The foregoing specific embodiments further describe the objectives, technical solutions, and beneficial effects of the present invention in detail. It should be understood that the foregoing are merely specific embodiments of the present invention, but not intended to limit the protection scope of the present invention. Any modifications, equivalent replacements, or improvements made without departing from the spirit and principle of the present invention should fall within the protection scope of the present invention.

## Claims

1. A load sharing method, **characterized in** comprising:
receiving, by a second provider edge PE device, a multi-chassis MC negotiation synchronization frame sent by a first PE device, wherein the MC negotiation synchronization frame carries information used to indicate a first virtual local area network VLAN;
determining, by the second PE device, an active/standby state of the second PE device according to the information used to indicate the first VLAN, wherein the active/standby state of the second PE device corresponds to the first VLAN; and
sending, by the second PE device, the active/standby state of the second PE device to a customer edge CE device, so that the CE device forwards a frame of the first VLAN according to the active/standby state of the second PE device.

2. The method according to claim 1, **characterized in that** the information used to indicate the first VLAN comprises: an identification of the first VLAN and priority information of the first VLAN in the first PE device.

3. The method according to claim 2, **characterized in that** the determining, by the second PE device, the active/standby state of the second PE device according to the information used to indicate the first VLAN comprises:
determining, by the second PE device, the active/standby state of the second PE device according to the priority information of the first VLAN in the first PE device.

4. The method according to claim 3, **characterized in that** the determining, by the second PE device, the active/standby state of the second PE device according to the priority information of the first VLAN in the first PE device, comprises:
comparing, by the second PE device, the priority information of the first VLAN in the first PE device and priority information of the first VLAN in the second PE device;
when a priority of the first VLAN in the first PE device is higher than a priority of the first VLAN in the second PE device, determining the second PE device as a standby device of the first VLAN; and
when the priority of the first VLAN in the first PE device is lower than the priority of the first VLAN in the second PE device, determining the second PE device as an active device of the first VLAN.

5. The method according to claim 1, **characterized in that** the sending, by the second PE device, the active/standby state of the second PE device to the customer edge CE device, comprises:
sending, by the second PE device, the active/standby state of the second PE device to the customer edge CE device through a link aggregation control protocol LACP message.

6. The method according to any one of claims 1 to 5, **characterized in that** the first VLAN is a VLAN supported by the first PE device, and comprises: at least one VLAN, or at least one VLAN group, or at least one VLAN and at least one VLAN group.

7. A load sharing method, **characterized in** the method comprising:
receiving, by a customer edge CE device, active/standby state information sent by at least one provider edge PE device, wherein an active/standby state of the at least one PE device corresponds to a VLAN; and
forwarding, by the CE device, a frame of the VLAN according to received active/standby state information of the at least one PE device.

8. A provider edge PE device used for load sharing, **characterized in** the PE used for load sharing comprising:
a receiving unit, configured to receive an MC negotiation synchronization frame sent by a first PE device, wherein the MC negotiation synchronization frame carries information used to indicate a first VLAN;
a determining unit, configured to determine, according to the information which is used to indicate the first VLAN and received by the receiving unit, an active/standby state of the PE device used for load sharing, wherein the active/standby state of the PE device used for load sharing corresponds to the first VLAN; and
a sending unit, configured to send the active/standby state of the PE device used for load sharing to a customer edge CE device, so that the CE device forwards a frame of the first VLAN according to the active/standby state of the PE device used for load sharing.

9. The PE device used for load sharing according to claim 8, **characterized in that** the determining unit is specifically configured to: determine, according to priority information of the first VLAN in the first PE device, the active/standby state of the PE device used for load sharing.

10. The PE device used for load sharing according to claim 9, **characterized in that** the determining unit comprises:
a comparing sub-unit, configured to compare the priority information of the first VLAN in the first PE device and priority information of the first VLAN in the PE device used for load sharing; and
a determining sub-unit, configured to determine, according to a comparison result of the comparing sub-unit, the active/standby state of the PE device used for load sharing; when a priority of the first VLAN in the first PE device is higher than a priority of the first VLAN in the PE device used for load sharing, determine the PE device used for load sharing as a standby device of the first VLAN; and when the priority of the first VLAN in the first PE device is lower than the priority of the first VLAN in the PE device used for load sharing, determine the PE device used for load sharing as an active device of the first VLAN.

11. The PE device used for load sharing according to claim 8, **characterized in that** the sending unit is specifically configured to:
send the active/standby state of the PE device used for load sharing to the customer edge CE device through a link aggregation control protocol LACP message.

12. A customer edge CE device, **characterized in** the CE device comprising:
a receiving unit, configured to receive an active/standby state sent by at least one provider edge PE device; wherein the active/standby state of the at least one PE device corresponds to a VLAN; and
a determining unit, configured to forward a frame of the VLAN according to active/standby state information of the at least one PE device, wherein the active/standby state information of the at least one PE device is received by the receiving unit.

13. A load sharing system, **characterized in** the system comprising:
at least one PE device, configured to receive an MC negotiation synchronization frame sent by a first PE device, wherein the MC negotiation synchronization frame carries information used to indicate a first VLAN, determine an active/standby state of the PE device according to the information used to indicate the first VLAN, wherein the active/standby state of the PE device corresponds to the first VLAN, and send the active/standby state of the PE device to a customer edge CE device, so that the CE device forwards a frame of the first VLAN according to the active/standby state of the PE device; and
the CE device, configured to receive the active/standby state sent by at least one PE device, wherein the active/standby state of the at least one PE device corresponds to a VLAN, and forward a frame of the VLAN according to received active/standby state information of the at least one PE device.
